Europäisches Patentamt

European Patent Office

Office européen des brevets

(11) Veröffentlichungsnummer : **0 171 709**
**B1**

(12) **EUROPÄISCHE PATENTSCHRIFT**

(45) Veröffentlichungstag der Patentschrift :
13.12.89

(51) Int. Cl.⁴ : **C 09 C  1/34, C 09 C  1/24**

(21) Anmeldenummer : 85109644.6

(22) Anmeldetag : 31.07.85

(54) Verfahren zur Herstellung eines Mischphasenpigmentes auf der Basis von Eisenoxid und Chromoxid.

(30) Priorität : 11.08.84 DE 3429678

(43) Veröffentlichungstag der Anmeldung :
19.02.86 Patentblatt 86/08

(45) Bekanntmachung des Hinweises auf die Patenterteilung : 13.12.89 Patentblatt 89/50

(84) Benannte Vertragsstaaten :
DE FR GB IT

(56) Entgegenhaltungen :
DE–B– 1 296 291
US–A– 4 211 565

(73) Patentinhaber : BASF Lacke + Farben Aktiengesellschaft
Max-Winkelmann-Strasse 80
D-4400 Münster (DE)

(72) Erfinder : Gaedcke, Harald, Dr.
Auenweg 20
D-7141 Schwieberdingen (DE)
Erfinder : Braun, Ruediger, Dr.
Grossheckenweg 3
D-5040 Roesrath (DE)
Erfinder : Bauer, Roland
Halbenmorgen 32
D-5060 Bergisch-Gladbach 1 (DE)

(74) Vertreter : Kinzel, Klaus, Dr. et al
BASF Aktiengesellschaft Patentabteilung Carl-Bosch-Strasse 38
D-6700 Ludwigshafen (DE)

EP 0 171 709 B1

## Beschreibung

Mischphasenpigmente sind bekannt. Auch Mischphasenpigmente auf der Basis von Eisenoxid und Chromoxid innerhalb des Systems (Fe, Cr)$_2$O$_3$ sind an sich beschrieben. Die letztgenannten Produkte, die auch als sogenanntes Chromeisenbraun verwendet werden, werden in zunehmendem Maße von der Kunststoffindustrie zum Einfärben von Bauteilen, z. B. Fensterprofile, benötigt, da sie hervorragende Echtheitseigenschaften aufweisen. Die coloristischen Eigenschaften, wie Kornfeinheit, Dispergierbarkeit und Ergiebigkeit der bisher auf dem Markt anzutreffenden Chromeisenbraun-Pigmente konnten jedoch den hohen Anforderungen, die die Kunststoffindustrie stellt, bisher nicht voll genügen.

Die Fertigung von Mischphasenpigmenten geschieht im allgemeinen durch Reaktion der oxidischen Komponenten in festem Zustand bei Temperaturen im Bereich zwischen 800 und 1 400 °C. Bei dieser Herstellungsart resultieren Pigmente mit sehr großem Teilchendurchmesser und starken Versinterungen, die trotz Mahlen Pigmente ergeben, die höheren Ansprüchen nicht genügen. Die Verwendung von besonders feinteiligen Oxiden, Hydroxiden oder anderen Verbindungen zur Erzeugung einer guten Mischung in wäßriger Suspension brachte keine wesentlichen Verbesserungen. Auch die Verwendung von Mischungen, wie Hydroxide oder Carbonate, die durch gemeinsames Ausfällen wäßriger Salzlösungen hergestellt wurden, brachten keine ausreichenden Verbesserungen.

Es sind außerdem Verfahren bekannt, die zu homogenen Braunprodukten der allgemeinen Zusammensetzung (Fe, Cr)$_2$O$_3$ führen, bei denen zersetzte Eisen- und Chromverbindungen bei höheren Temperaturen geglüht werden. Solche Verfahren, die meist von den entsprechenden Carbonylverbindungen der Metalle ausgehen, sind jedoch wegen der vergleichsweise schwer zugänglichen Ausgangsstoffe umständlich und kostenaufwendig. Auch können die nach diesen Verfahren erhaltenen Braunpigmente in den Eigenschaften nicht die geforderten Ansprüche erfüllen.

Die Anmelderin hatte sich infolgedessen die Aufgabe gestellt, Mischphasenpigmente auf der Basis von Eisenoxid/Chromoxid mit guter Licht- und Wetterechtheit herzustellen, die insbesondere bezüglich der Kornfeinheit, Dispergierbarkeit und Ergiebigkeit bzw. Farbstärke die bekannten Chromeisenbraun-Pigmente übertreffen. Außerdem sollten diese Pigmente nach einem vergleichsweise einfachen Verfahren hergestellt werden können.

Die Aufgabe wird durch das erfindungsgemäße Verfahren gelöst. Die Erfindung betrifft ein Verfahren zur Herstellung eines Mischphasenpigmentes auf der Basis von Eisenoxid und Chromoxid durch Temperung einer Mischung der Oxide bzw. Hydroxide oder Oxihydrate des Eisens und des Chroms bei Temperaturen von 600 bis 1 100 °C, anschließendem Zerkleinern und üblicher Aufarbeitung, das dadurch gekennzeichnet ist, daß eine Mischung aus einem transparenten Eisenoxid der α-Modifikation mit rhombisch bipyramidaler Kristallstruktur und einem Chrom-III-Hydroxid, das durch Ausfällen mit Alkali, vorzugsweise Soda, auf das transparente Eisenoxid aufgebracht wurde, getempert wird, wobei das Molverhältnis von Eisen-III-oxid zu Chrom-III-oxid 55 : 45 bis 97 : 3 beträgt.

Das Ergebnis hinsichtlich der coloristischen Eigenschaften der Verfahrensprodukte war überraschend. Geht man bei dem Verfahren von einem deckenden Eisenoxidgelb, das die gleiche chemische Zusammensetzung hat, aus, dann erhält man Pigmente mit wesentlich gröberem Korn, geringerer Ausgiebigkeit (Farbstärke) und einem stumpferen Farbton. Selbst wenn man das deckende Eisenoxidgelb vorher intensiv mahlt, erhält man ein Pigment, das in den coloristischen Eigenschaften dem nach dem erfindungsgemäßen Verfahren erhaltenen Braunpigment unterlegen ist.

Das erzielte Ergebnis war auch nicht zu erwarten, da unter Verwendung anderer Eisenoxide, die jedoch nicht die vorstehend definierte Kristallform besitzen und z. B. aus amorphem Eisenoxidhydrat bestehen, nur harte, farbschwache und nur sehr schlecht dispergierbare Pigmente erhalten werden.

Die als Ausgangsstoffe benötigten transparenten Eisenoxide der α-Modifikation mit rhombisch bipyramidaler Kristallstruktur sind bekannt und können nach einem der bekannten und in der Patentliteratur offenbarten Verfahren hergestellt werden.

Bevorzugt sind als Ausgangsstoffe solche transparenten Eisenoxide, deren Primärteilchen im Bereich von 0,05 bis 0,8, insbesondere von 0,1 bis 0,4 μm liegen. Diese liefern Braunpigmente mit besonders guten coloristischen und anwendungstechnischen Eigenschaften.

Demgegenüber liefern nadelförmige Eisenoxide von 1,2 μm Länge bereits Braunpigmente, die weniger brillante und schwächere Färbungen liefern.

Das Gemisch aus dem transparenten Eisenoxid der α-Modifikation und dem Chrom-III-hydroxid wird durch Fällen einer Lösung eines Chrom-IIIsalzes in Gegenwart des Eisenoxids mit Alkali, vorzugsweise mit Soda oder Kaliumcarbonat erhalten. Das Fällen erfolgt bei Raumtemperatur bis 95 °C, vorzugsweise bei 40 bis 80 °C.

Die Fällung (das Gemisch) wird filtriert, gewaschen und getrocknet. Das getrocknete Gemisch wird dann in an sich bekannter Weise bei Temperaturen im Bereich von 600 bis 1 100 °C getempert. Das Tempern erfolgt nach bekannten Verfahren z. B. in Herdwagenöfen, Drehrohröfen oder ähnlichen Brennöfen.

Der Farbton der Pigmente wird durch steigenden Anteil an Chromoxid von hellbraunen über mittelbraune bis zu tief dunkelbraunen Farbtönen verschoben.

Für die Lack- und Kunststoffindustrie besonders interessante Farbtöne werden erhalten, wenn das Molverhältnis Eisen-III-oxid zu Chrom-III-oxid im Bereich 55 : 45 bis 97 : 3 liegt.

Zu einem geringeren Teil sind die coloristischen Eigenschaften der Verfahrensprodukte auch durch die Temperatur beim Tempern (Brenntemperatur) zu beeinflussen. Der Fachmann kann für diesen Fall in Abhängigkeit von der Ofenkonstruktion und der Verweilzeit die jeweils optimale Temperatur leicht durch einfache Versuche ermitteln. So erzielt man z. B. bei einem Molverhältnis von Eisen-III-oxid zu Chrom-III-oxid von 80 : 20 bei 920 °C optimale Ergebnisse.

In den coloristischen und anwendungstechnischen Eigenschaften besonders überlegene Pigmente erhält man, wenn im Zuge der Aufarbeitung das getemperte Gut einer Naßmahlung in einer Kugelmühle, Sandmühle, Perlmühle oder entsprechenden Mahlvorrichtungen unterzogen wird.

Gegebenenfalls können der Suspension des Mahlgutes vor der Isolierung Netzmittel und/oder weitere übliche Additive die Pigmenten zum Erreichen bestimmter verbesserter Eigenschaften zugegeben werden, zugesetzt werden.

Als Netzmittel kommen die bekannten organischen Tenside in Betracht. Als weitere übliche Additive sind z. B. Aluminiumoxide, Phosphate oder Amine und Fettsäuren zu nennen, die den Pigmenten üblicherweise als Dispergierhilfe, Gleitmittel u. a. für die Weiterverarbeitung zugemischt werden.

Beispiel 1

In einer wäßrigen, neutralen Suspension von 460 kg transparentem Eisenoxidgelb (hergestellt nach einem aus der Patentliteratur bekannten Verfahren) in 6 000 l Wasser werden 503 kg Chrom-III-Sulfat, kristallwasserhaltig (26 % $Cr_2O_3$) gelöst und anschließend mit einer Sodalösung (Konzentration 168 g pro Liter) bis zur Erreichung des pH-Wertes von 7,2 versetzt. Das Lösen des Chromsulfates und die anschließende Sodafällung erfolgt bei Temperaturen von 70 bis 80 °C. Die Suspension wird filtriert, gewaschen und getrocknet. Das getrocknete, olivgrüne Produkt wird bei einer Temperatur von ca. 930 °C gebrannt. Das Reaktionsprodukt wird in einer Kugelmühle naß gemahlen, dann filtriert, schließlich gewaschen und getrocknet. Das getrocknete Pigment wird auf einer Turbomühle gemahlen. Man erhält 520 kg Pigment. Das Molverhältnis $Fe_2O_3$ zu $Cr_2O_3$ ist 75 : 25. Das Pigment läßt sich mit hoher Ausgiebigkeit dispergieren und liefert Färbungen im dunkelbraunen brillanten Farbton.

Praktisch das gleiche Ergebnis wird erhalten, wenn man als Eisenoxid ein transparentes Eisenoxidgelbpigment der α-Modifikation und rhombisch bipyramidaler Kristallstruktur, das im Handel erhältlich ist, verwendet.

Anstelle der Naßmahlung in der Kugelmühle kann die wäßrige Suspension auch in einer Sandmühle oder in einer Perlmühle gemahlen werden.

In beiden Fällen erhält man Braunpigmente mit praktisch den gleichen coloristischen und anwendungstechnischen Eigenschaften.

Beispiel 2

Für die Herstellung eines hellbraunen Chromeisenbrauns verfährt man wie in Beispiel 1, jedoch mit dem Unterschied, daß anstelle von 503 kg nur 175 kg Chromsulfat, kristallwasserhaltig (26 % $Cr_2O_3$), angewendet werden. Nachdem Lösen wird wie in Beispiel 1 verfahren. Das Tempern des Gemisches erfolgte bei Temperaturen zwischen 900 und 910 °C. Man erhält 430 kg Pigment in Form eines hellbraunen Pulvers, das Färbungen in einem außerordentlich brillanten Farbton liefert. Das Molverhältnis $Fe_2O_3$ zu $Cr_2O_3$ ist 90 : 10. Die anwendungstechnischen Eigenschaften des Pigments entsprechen denen des nach Beispiel 1 erhaltenen Pigments.

Patentansprüche

1. Verfahren zur Herstellung eines Mischphasenpigmentes auf der Basis von Eisenoxid und Chromoxid durch Tempern einer Mischung der Oxide bzw. Hydroxide oder Oxihydrate des Eisens und des Chroms bei Temperaturen von 600 bis 1 100 °C, anschließendem Zerkleinern und üblicher Aufarbeitung, dadurch gekennzeichnet, daß eine Mischung aus einem transparenten Eisenoxid der α-Modifikation mit rhombisch bipyramidaler Kristallstruktur und einem Chrom-III-hydroxid, das durch Ausfällen mit Alkali, vorzugsweise Soda, auf das transparente Eisenoxid aufgebracht wurde, getempert wird, wobei das Molverhältnis Eisen-III-oxid zu Chrom-III-oxid 55 : 45 bis 97 : 3 beträgt.

2. Verfahren nach Anspruch 1, dadurch gekennzeichnet, daß das transparente Eisenoxid aus nadelförmigen Primärteilchen der Größe 0,05 bis 0,8 μm besteht.

3. Verfahren nach Anspruch 1, dadurch gekennzeichnet, daß das transparente Eisenoxid aus nadelförmigen Primärteilchen der Größe 0,1 bis 0,4 μm besteht.

4. Verfahren nach den Ansprüchen 1 bis 3, dadurch gekennzeichnet, daß das getemperte Gut einer Naßmahlung in einer Kugel- oder Sandmühle unterzogen wird.

5. Verfahren nach Anspruch 4, dadurch gekennzeichnet, daß der Suspension des Mahlgutes vor der Isolierung Netzmittel und/oder weitere übliche Pigmentadditive zugegeben werden.

Claims

1. A process for the preparation of a mixed-phase pigment based on iron oxide and chromium oxide by heating a mixture of the oxides, hydroxides or oxide hydroxides of iron and of chromium at from 600 to 1 100 °C, comminuting the product and working it up in a conventional manner, wherein a mixture of a transparent α-iron oxide having an orthorhombic bipyramidal crystal structure and a chromium(III) hydroxide, which has been applied onto the transparent iron oxide by precipitation with an alkali, preferably sodium carbonate, is heated, the molar ratio of iron(III) oxide to chromium(III) oxide being from 55 : 45 to 97 : 3.

2. A process as claimed in claim 1, wherein the transparent iron oxide consists of acicular primary particles of from 0.05 to 0.8 μm.

3. A process as claimed in claim 1, wherein the transparent iron oxide consists of acicular primary particles of from 0.1 to 0.4 μm.

4. A process as claimed in any of claims 1 to 3, wherein the heated material is subjected to wet-milling in a ball mill or sand mill.

5. A process as claimed in claim 4, wherein a wetting agent and/or other conventional pigment additives is or are added to the suspension of the mill base before isolation.

**Revendications**

1. Procédé de préparation d'un pigment à phases mélangées à base d'oxyde de fer et d'oxyde de chrome par recuit d'un mélange de l'oxyde respectivement de l'hydroxyde ou de l'oxyhydrate de fer et de chrome à des températures de 600 à 1 100 °C, broyage ultérieur et traitement final classique, caractérisé en ce qu'on recuit un mélange d'un oxyde de fer transparent de forme α avec une structure cristalline bipyramidale rhombique et un hydroxyde de chrome-III qui a été déposé sur l'oxyde de fer transparent par précipitation à l'aide d'une base, par exemple le carbonate de sodium, le rapport molaire de l'oxyde de fer-III à l'oxyde de chrome-III étant de 55 : 45 à 97 : 3.

2. Procédé selon la revendication 1, caractérisé en ce que l'oxyde de fer transparent est constitué de particules primaires en forme d'aiguilles d'une taille de 0,05 à 0,8 μm.

3. Procédé selon la revendication 1, caractérisé en ce que l'oxyde de fer transparent est constitué de particules primaires en forme d'aiguilles d'une taille de 0,1 à 0,4 μm.

4. Procédé selon l'une des revendications 1 à 3, caractérisé en ce que le produit recuit est soumis à un broyage humide dans un broyeur à boulets ou à sable.

5. Procédé selon la revendication 4, caractérisé en ce que des agents gélifiants et/ou d'autres additifs pour pigments usuels sont ajoutés à la suspension de produit de broyage avant isolement.